# NEUE EUROPÄISCHE PATENTSCHRIFT

(11) **EP 0 532 055 B2**
(45) Veröffentlichungstag und Bekanntmachung des Hinweises auf die Entscheidung über den Einspruch: **02.01.2003**
(45) Hinweis auf die Patenterteilung: 23.09.1998
(21) Anmeldenummer: 92116362.2
(22) Anmeldetag: 07.06.1989
(51) Int. Cl.: A01C 17/00, A01C 15/00

(54) **Verfahren und Vorrichtung zum Ausbringen von Düngemitteln mittels eines Zentrifugaldüngerstreuers**
Distributing method and device for fertilizer with a broadcaster spreader
Méthode et dispositif de distribution d'engrais par un épandeur centrifuge

(30) Priorität: 18.06.1988 DE 3820681; 04.10.1988 DE 3833638
(43) Veröffentlichungstag der Anmeldung: 17.03.1993
(62) Teilanmeldung aus: 89110263.4
(73) Patentinhaber: Amazonen-Werke H. Dreyer GmbH & Co. KG, 49205 Hasbergen (DE)
(72) Erfinder: Dreyer, Heinz, Dr., W-4507 Hasbergen/Gaste (DE)
(74) Vertreter: Grünecker, Kinkeldey, Stockmair & Schwanhäusser Anwaltssozietät

(56) Entgegenhaltungen:
- EP-A- 269 501
- US-A- 4 511 090
- Prospekt der Fa. Rauch Landmaschinenfabrik GmbH, Sinzheim, "KOMET ZSB", 1986

## Beschreibung

Die Erfindung betrifft ein Verfahren zum Ausbringen von Düngemitteln mittels eines Zentrifugaldüngerstreuers gemäß Oberbegriff des Patentanspruches 1.

Aus der EP-A-127 922 ist ein Verfahren nach dem Oberbegriff des Anspruchs 1 und ein Düngerstreuer nach dem Oberbegriff des Anspruchs 2 bekannt, der um wenigstens einen Teil des Umfanges seiner Schleuderscheiben in dem Bereich, wo das auzustreuende Material von den Schleuderscheiben abgeschleudert wird, Umlenkelemente aufweist. Dieser Düngerstreuer weist zwei um aufrechte Achsen rotierende und mit Wurfschaufeln besetzte Schleuderscheiben auf, mit denen die auszustreuenden Düngemittelpartikel über die zu bestreuende Fläche verteilt werden. Die Schleuderscheiben dieses Düngerstreuers werden derart im entgegengesetzten Drehsinn zueinander angetrieben, daß sich die von den Schleuderscheiben erzeugten Streufächer annähernd vollständig überlappen. Der Dünqerstreuer ist an Teilen des Umfanges der Schleuderscheiben mit einem oder mehreren Umlenkelementen ausgestattet, die sich in ihrer Arbeitsstellung in der Bahn des ausgeworfenen Streumaterials befinden und dieses derart bremsen und umlenken, daß das Streugut auf einer Seite des Düngerstreuers über einen schmaleren Streifen ausgestreut wird als auf der anderen Seite, also quer zur Fahrtrichtung die Streubreite auf der einen Seite der Mittelachse des Düngerstreuers verringert wird, was z. B. beim Streuen am Ackerrand zweckmäßig ist. Durch das Entfernen der Umlenkelemente aus der Bahn des auszuwerfenden Streumaterials kann die normale, auf beiden Seiten der Mittelachse des Düngerstreuers gleiche Streubreite wiederhergestellt werden.

Diese, mit den jeweiligen Schleuderscheiben zusammenwirkenden Umlenkelemente bilden eine reine Grenzstreuvorrichtung, die das Bestreuen des Randbereiches eines Ackers ermöglicht, wobei zum Feldrand hin mit geringerer Streubreite gestreut wird, als zur Feldmitte. Mit diesen Umlenkelementen soll ein Streubild mit zum Feldrand hin steil abfallender Streuflanke erzeugt werden, so dass sich auch zum Randbereich hin eine gleichmäßige Streudichte ergibt. Diese Umlenkelemente dienen also nur zum einseitigen reduzieren der Streubreite eines Schleuderdüngerstreuers, wobei quer zur Fahrtrichtung auf einer Seite des Düngerstreuers das Material mit geringerer Wurfweite als auf der anderen Seite abgeschleudert wird. Eine Beeinflussung der Streutiefe in Fahrtrichtung des von den Streusektoren der Schleuderscheiben erzeugten Streubildes findet nicht statt. Mit diesen mit den Schleuderscheiben zusammenwirkenden Umlenkelemente wird also nur eine einseitige Streubreitenreduzierung des Düngerstreuers quer zur Fahrtrichtung erreicht, so da D ein exaktes Bestreuen von Feldrändern mit zum Feldrand hin reduzierter Streubreite, beispielsweise bei einem vorgegebenen Fahrgassensystem mit genau festgelegtem Abstand für die Fahrspuren des den Düngerstreuer transportierenden Ackerschleppers, ermöglicht wird.

Des Weiteren ist es aus dieser Druckschrift bekannt, den Düngerstreuer mit einer Schwenkvorrichtung auszustatten. Mittels dieser Schwenkvorrichtung sind die um aufrechte Achsen rotierend angetriebenen Schleuderscheiben quer zur Fahrtrichtung des Düngerstreuers schräg zum Boden anstellbar, um eine einseitige Streubreitenreduzierung quer zur Fahrtrichtung herbeizuführen. Hierbei weisen die beiden Schleuderscheiben durch die Schrägstellung des gesamten Streuers dann eine unterschiedliche Höhenlage zueinander auf, so daß die Schleuderscheiben die Düngemittelpartikel mit unterschiedlichen Wurfweiten quer zur Fahrtrichtung abschleudern. Durch die Schrägstellung des Düngerstreuers sollen die seitlichen Ränder einer zu bestreuenden Ackerfläche mit einseitig geringerer Streubreite bestreut werden. Auch damit soll, aus den gleichen Gründen wie oben geschildert, eine einseitige Streubreitenbegrenzung quer zur Fahrtrichtung herbeigeführt werden. Die Düngemittelpartikel werden also bei beiden Varianten in Fahrtrichtung gesehen bis weit hinter den Düngerstreuer abgeschleudert, so daß ein Streubild mit in Fahrtrichtung großer Streutiefe entsteht, wodurch auch bei diesen Streuern ein exaktes Ausstreuèn der Vorgewendeflächen, die sich jeweils in etwa senkrecht zu den Feldrändern befinden und in deren Bereich der Fahrtrichtungswechsel beim Düngerstreuen durchgeführt wird, nicht möglich ist.

Aus der US-C-45 11 090 ist ein gattungsfremder Handstreuer bekannt, bei dem unter einem Vorratsbehälter eine Streuschaufel angeordnet ist. In den Streubereich kann ein Umlenkschirm 25 seitlich angeordnet werden, der den Streufächer einseitig begrenzt.

Der Erfindung liegt die Aufgabe zugrunde, den Dünger auch mit etwa der halben Streubreite des Düngerstreuers exakt in der gewünschten Streumenge pro Flächeneinheit ausbringen zu können. Diese Aufgabe wird mit dem im Anspruch 1 angegebenen Verfahren und der im Anspruch 2 angegebenen Vorrichtung gelöst.

Mit diesen Maßnahmen ist es auch bei einem Streuer mit sich ansonsten annähernd vollständig überlappenden Streusektoren erstmals möglich, den Dünger auch halbseitig in der gewünschten Ausbringmenge pro Flächeneinheit auszubringen, ohne daß die ursprüngliche Einstellung der Öffnungsweite der Auslauföffnung verändert werden muss. Das halbseitige Streuen läßt sich nun auch bei diesem Streuer durch das Unterbrechen der Düngerzufuhr zu der einen oder der anderen Schleuderscheibe auf einfachste Weise herbeiführen. Es kann vorgesehen sein, daß die auf beiden Seiten angeordneten Leitflächen zueinander spiegelbildlich ausgebildet sind.

Die Leitelemente können auf einfachste Weise am Rahmen des Düngerstreuers befestigt werden, wobei diese Leitelemente nur die Streutiefe der Streusektoren in Fahrtrichtung beeinflussen, alle anderen Parameter zur 8erstellung einer gleichmäßigen Düngerverteilung über die gesamte Streubreite werden nicht verändert. Hierdurch ist es möglich, den Streuer sowohl ohne, als auch mit diesen Leitelementen einzusetzen, ohne spezielle Einstellungen am Düngerstreuer vornehmen zu müssen. Die Leitelemente führen weder zu einer Veränderung der gewünschten Arbeitsbreite quer zur Fahrtrichtung noch zu einer Veränderung der Streubildcharakteristik des Düngerstreuers, sondern nur zu einer Reduzierung der Streutiefe der Streusektoren in Fahrtrichtung.

Die Ausbildung der Leitflächen der Leitelemente ist so ausgeführt, daß die Leitflächen in ihrem vorderen, den Schleuderscheiben zugewandten Bereich zumindest etwa tangential zur Abwurfrichtung der Düngerpartikel verlaufen und über die sich anschlie0ende Krümmung etwa in senkrechter Richtung zur Fahrtrichtung übersehen, wobei mehrere Leitflächen in Fahrtrichtung gesehen in einem Abstand zueinander angeordnet und die Leitflächen durch einen Rahmen zu einem Leitkasten zusammengefasst sein können.

Weiterhin ist erfindungsgemäß vorgesehen, dass im hinteren sowie seitlichen hinteren Bereich der Schleuderscheiben jeweils aufrechte Leitflächen derart angeordnet sind, daß sie den seitlich sc5räg nach hinten, in Fahrtrichtung gesehen, abgeschleuderten Dünger in eine quer oder zumindest annähernd senkrecht zur Fahrtrichtung liegende Richtung seitlich des Streuers umlénken. Hierdurch findet eine weitere Reduzierung der Streutiefe der Streusektoren in Fahrtrichtung statt, indem die Düngemittelpartikel in diesem Bereich nicht mehr so weit nach hinten abgeschleudert werden, sondern in eine quer zur Fahrtrichtung liegende Richtung umgelenkt werden. Die gro0e Streutiefe der in Fahrtrichtung abgeschleuderten Düngemittelpartikel wird hierdurch erheblich reduziert, so daß sich ein schmaler, streifenförmiger Streustreifen der Düngemittelpartikel ergibt.

Um die Streutiefe der Streusektoren in Fahrtrichtung noch weiter zu reduzieren, ist erfindungsgemäß vorgesehen, daß sich hinter den Schleuderscheiben ein liegend angeordnetes Leitblech befindet, welches sich auf der den Schleuderscheiben zugewandten Seite zunächst etwa tangential an die Wurfbahnen der Düngepartikel anlegt und dann nach unten gekrümmt ist und die Düngemittelpartikel seitlich nach unten ablenkt. Hierbei ist dann weiter erfindungsgemäß vorgesehen, daß auf der Unterseite des Leitbleches aufrecht stehende Leitflächen angeordnet sind, daß diese Leitflächen sich zunächst auf ihrer den Schleuderscheiben zugewandten Seiten tangential an die Wurfbahnen der Düngerpartikel anlegen und anschließend in seitlicher Richtung gekrümmt sind. Hierdurch wird den von den Wurfelementen der Schleuderscheiben in Fahrtrichtung nach hinten abgeschleuderten Düngemittelpartikeln beim Passieren dieser Leitelemente, durch die bei Umlenkung der Düngemittel hervorgerufene Reibung zwischen den Düngemittelpartikeln und den Leitelementen, Bewegungsenergie entzogen, wodurch die Flugbahnen der nach hinten abgeschleuderten Düngemittelpartikel verkürzt und so die Streutiefe der Streusektoren in Fahrtrichtung verringert wird.

Bei einer bevorzugten Ausführungsform läßt sich die Streutiefe der Streusektoren in Fahrtrichtung ebenfalls zu einem schmalen streifenförmigen Streubereich zusammenführen, indem in Fahrtrichtung gesehen, im hinteren Bereich der Schleuderscheiben jeweils aufrechte Leitflächen spiegelbildlich gleich im Bereich der Mittelachse des Schleuderdüngerstreuers angeordnet sind. Hierdurch werden die Flugbahnen der nach hinten abgeschleuderten Düngemittelpartikel ebenfalls erheblich reduziert, wodurch sich in Fahrtrichtung Streusektoren geringerer Streutiefe ergeben.

Durch den Einsatz dieser spiegelbildlich rechts und links im seitlichen Bereich der-Schleuderscheiben des Düngerstreuers angeordneten Leitelemente wird erfindungsgemäß erreicht, daß durch die aufrechten Leitflächen, der an sich von den Wurfschaufeln durch das Abschleudern der Düngemittelpartikel erzeugten halbkreisförmigen und sich weit nach vorn und hinten erstreckenden Streusektoren, in und entgegen der Fahrtrichtung, durch die Umlenkung der nach hinten und nach vorn abqeschleuderten Düngemittelpartikel "zusammengeschoben" wird, so daß ein schmaler, sich seitlich und im geríngeren Abstand hinter den Vorratsbehälter des Streuers erstreckender Streustreifen entsteht.

Weitere Einzelheiten der Erfindung sind den übrigen Unteransprüchen, der Beispielsbeschreibung und den Zeichnungen zu entnehmen. Hierbei zeigt
- Figur 1: ein weiteres Streuwerk eines Schleuderdüngers, wobei die Schleuderscheiben derart rotierend angetrieben sind, dass sie in Fahrtrichtung auseinanderdrehen,
- Figur 2: ein weiterer, in erfindungsgemässer Weise ausgebildeter Schleuderdüngerstreuer, wobei die Leitelemente jeweils schräg nach oben, entsprechend des Abwurfwinkels der Düngemittelpartikel angestellt sind,
- Figur 3: die zu dem Leitkasten zusammengefassten Leitflächen,
- Figur 4: einen Schleuderdüngerstreuer in der Seitenansicht, wobei die Flugbahnen der nach hinten abgeschleuderten Düngemittelpartikel, die relativ weit nach hinten abgeschleudert werden, dargestellt sind,
- Figur 5: einen Schleuderdüngerstreuer, wobei die Düngerzufuhr zur rechten Schleuderscheibe unterbrochen ist,

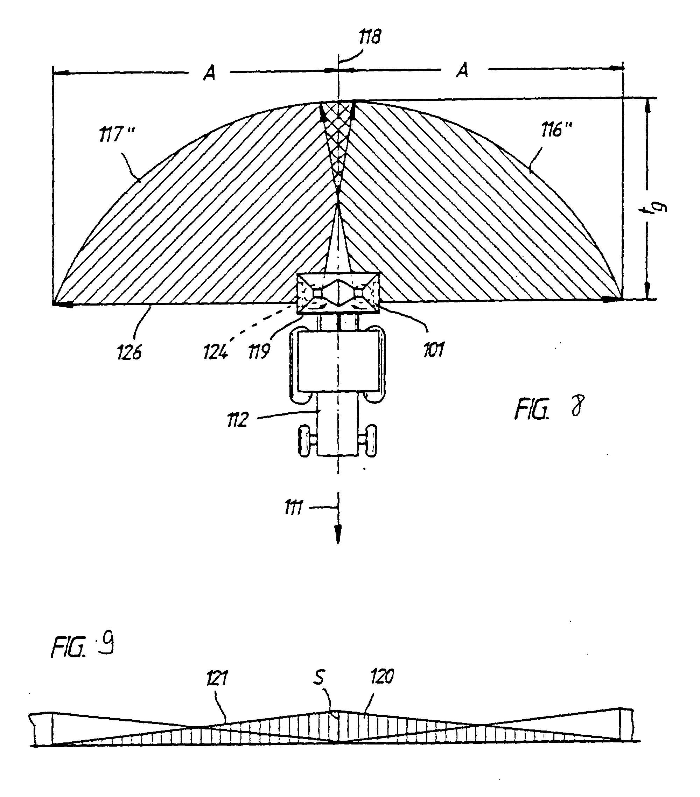

- Figur 6: das von der Schleuderscheibe des Schleuderdüngerstreuers gemäß Figur 5 erzeugte Streubild,
- Figur 7: einen Schleuderdüngerstreuer in der Seitenansicht, wobei der Schleuderdüngerstreuer nach hinten geneigt ist, wodurch sich eine nach hinten reduzierte Wurfweite der von den Schleuderscheiben abgeschleuderten Düngemittelpartikel ergibt,
- Figur 8: schematische Darstellung der von den Schleuderscheiben des geneigten Schleuderdüngerstreuers, gemäß Fig. 7 erzeugten Streusektoren,
- Figur 9: das Streubild der von den Schleuderscheiben des Düngerstreuers gemäß Fig. 8 abgeschleuderten Düngemittelpartikel,
- Figur 10: schematische Darstellung der von Schleuderscheiben eines Schleuderdüngerstreuers erzeugten Streusektoren, wobei sich die von den Schleuderscheiben erzeugten Streufächer oder Streusektoren annähernd vollständig überlappen,
- Figur 11: das Streubild der von den Schleuderscheiben des Düngerstreuers gemäß Fig. 10 abgeschleuderten Düngemittelpartikel,
- Figur 12: den Schleuderdüngerstreuer gemäß Figur 10, wobei die Düngerzufuhr zur rechten Schleuderscheibe unterbrochen ist, mit dem von der linken Schleuderscheibe erzeugten Streusektor,
- Figur 13: das von der Schleuderscheibe des Schleuderdüngerstreuers gemäß Fig. 12 erzeugte Streubild,
- Figur 14: das Streuwerk des Schleuderdüngerstreuers gemäß Fig. 10 in der Draufsicht, wobei dieses Streuwerk durch die im hinteren Bereich der Schleuderscheibe angeordneten Leitelemente ergänzt ist,

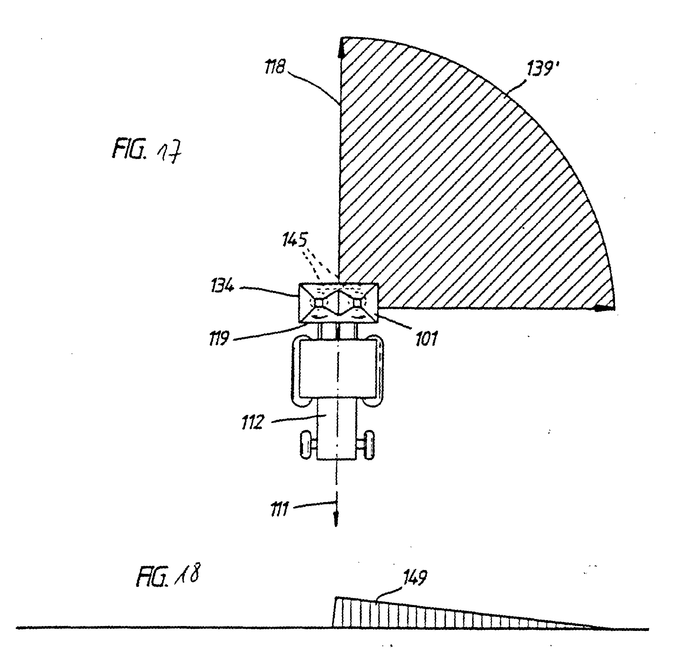

- Figur 15: den Schleuderdüngerstreuer gemäß Fig. 10, jedoch mit den zusätzlichen Leitelementen gemäß Fig. 17 und die schematische Darstellung der von den Schleuderscheiben erzeugten Streusektoren,
- Figur 16: das Streubild der von den Schleuderscheiben des Düngerstreuers gemäß Fig. 15 abgeschleuderten Düngemittelpartikel,
- Figur 17: den Schleuderdüngerstreuer gemäß Fig. 15, wobei die Düngemittelzufuhr zu der rechten Schleuderscheibe unterbrochen ist, mit dem von der linken Schleuderscheibe erzeugten Streusektor,
- Figur 18: das Streubild des von der linken Schleuderscheibe erzeugten Streusektors und
- Figur 19: das Streuwerk gemäß Fig. 14, wobei noch zusätzlich Leitelemente im vorderen Bereich der Schleuderscheibe angeordnet sind.

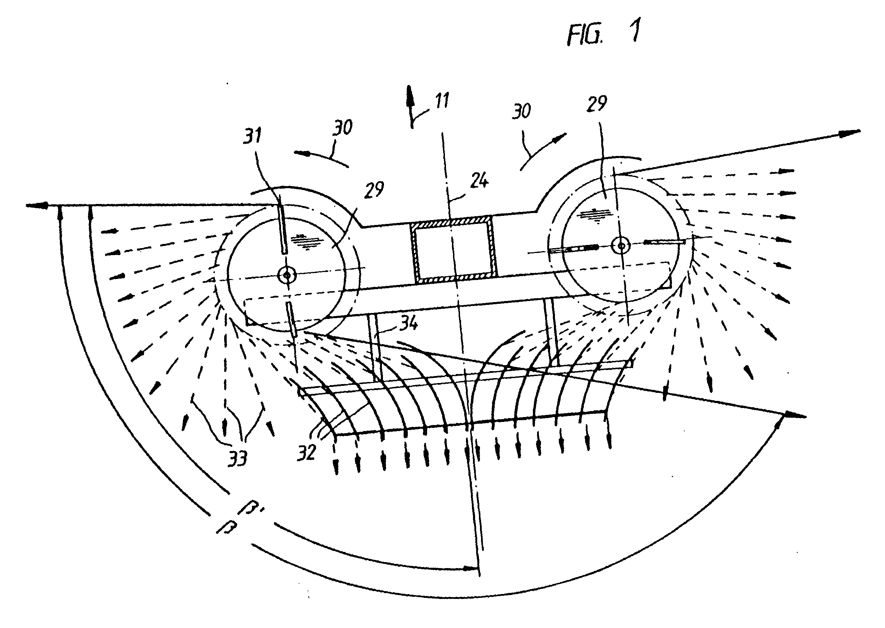

Die Fig. 1 zeigt das Streuwerk eines Schleuderdüngerstreuers, bei dem die Schleuderscheiben 29 in Pfeilrichtung 30 in Fahrtrichtung 11 angetrieben werden, also im vorderen Bereich des Schleuderdüngerstreuers auseinanderdrehen. Bei den in Pfeilrichtung 30 angetriebenen Schleuderscheiben 29 werden die Düngemittelpartikel von den Wurfschaufeln 31 bisher über einen Abstreubereich β abgeschleudert. Werden nun die symmetrischen Leitflächen 32 für jede Schleuderscheibe 29 im hinteren Bereich der Schleuderscheiben 29 jeweils im Bereich der Fahrzeugslängsachse 24 angeordnet, werden die von den Schleuderscheiben 29 abgeschleuderten Düngemittelpartikel, welche in Richtung der gestrichelten Linien 33 abgeschleudert werden, derart von den Leitflächen 32 umgelenkt, so daß sich der Abstreubereich β' ergibt. Uber die Halterung 34 sind die Leitflächen 32 an dem Rahmen des Schleuderdüngerstreuers befestigt, Der Abstreubereich β wird also wesentlich auf den Abstreubereich β' reduziert, so daß jetzt die von einer Schleuderscheibe 29 abgeschleuderten Düngemittelpartikel nur noch rechts bzw. links der Fahrzeugslängsachse 24 ausgestreut werden. Eierdurch ist es nun auch möglich, daß Streubild dieses Düngerstreuers bei Abschalten der Düngerzufuhr auf einer Seite.exakt zu halbieren, d.h. wahlweise links oder rechts halbseitig zu streuen. Durch die Umlenkung der Düngemittelpartikei im hinteren Bereich der Schleuderscheiben 29 durch die Leitflächen 32 wird diesen Düngemittelpartikeln ebenfalls ßewegungsenergie entzogen, so daß sie nicht mehr so weit bis hinter den Schleuderdüngerstreuer abgeschleudert werden und sich somit auch bei diesem Düngerstreuer die Streutiefe in Fahrtrichtung 11 wesentlich verringert.

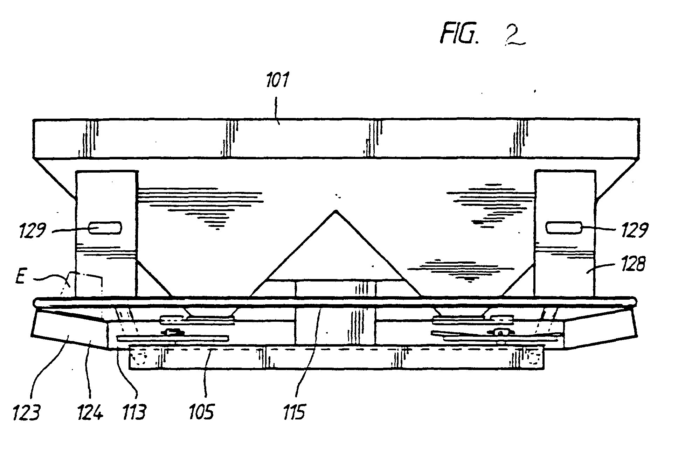

Die Fig. 2 zeigt einen Schleuderdüngerstreuer 101 mit einem Schutzbügel 115, der mittels der Konsole 128 an dem Vorratsbehälter 101 befestigt ist. Der Leitkasten 123 ist ebenfalls zu erkennen.

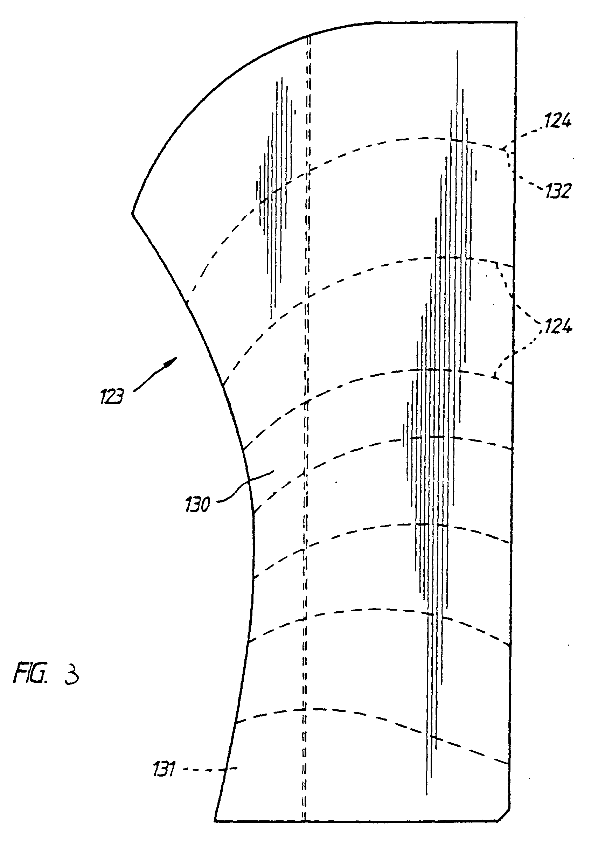

Die Fig. 3 zeigt den Leitkasten 123, der aus der oberen Abdeckplatte 130 und der unteren, abgekanteten Verstärkungsplatte 131 besteht. Zwischen diesen beiden Platten 130 und 131 sind die Leitelemente 124 mit den einzelnen Leitflächen 132 angeordnet. Diese einzelnen Leitflächen 132 sind in Fahrtrichtung gesehen, in einem Abstand zueinander angeordnet. Bei dem hier abgebildeten Leitkasten 123 handelt es sich um den Leitkasten 123 für die in Fahrtrichtung gesehen rechte Schleuderscheibe 105 des Schleuderdüngerstreuers. Für die linke Schleuderscheibe ist der Leitkasten in gleicher Weise, jedoch spiegelbildlich ausgebildet.

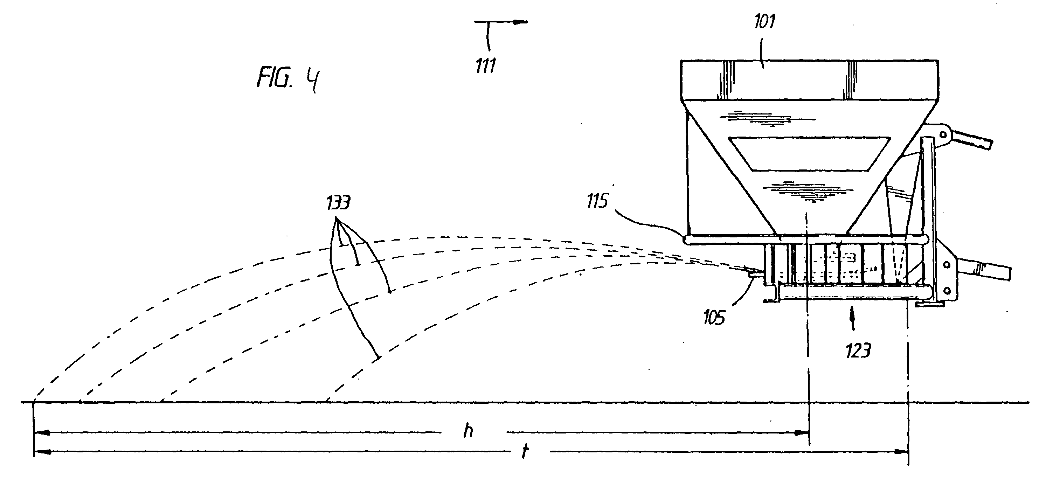

Die Fig. 4 zeigt einen Schleuderdüngerstreuer in der Seitenansicht, wobei einzelne Wurfbahnen 133 der nach hinten abgeschleuderten Düngemittelpartikel dargestellt sind. Diese nach hinten abgeschleuderten Düngemittelpartikel weisen von der aufrechten Achse 109 der Schleuderscheiben 105 die maximale Weite h auf.

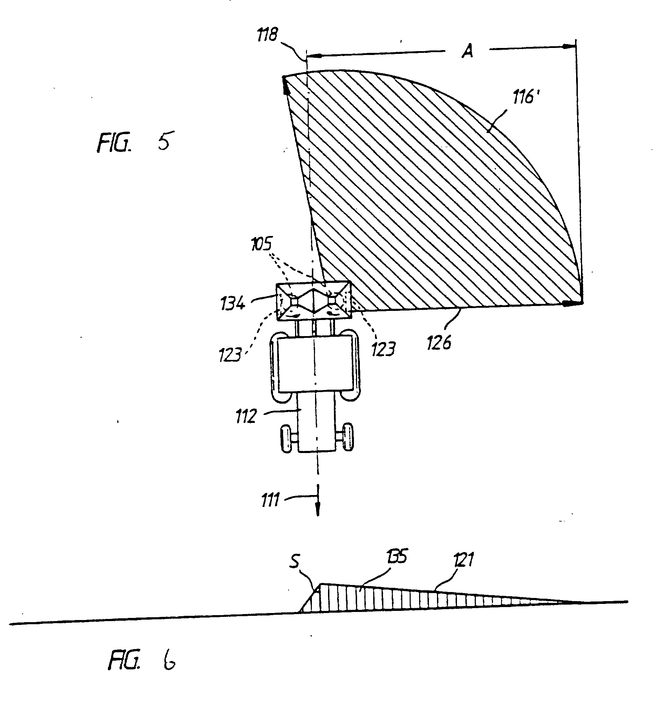

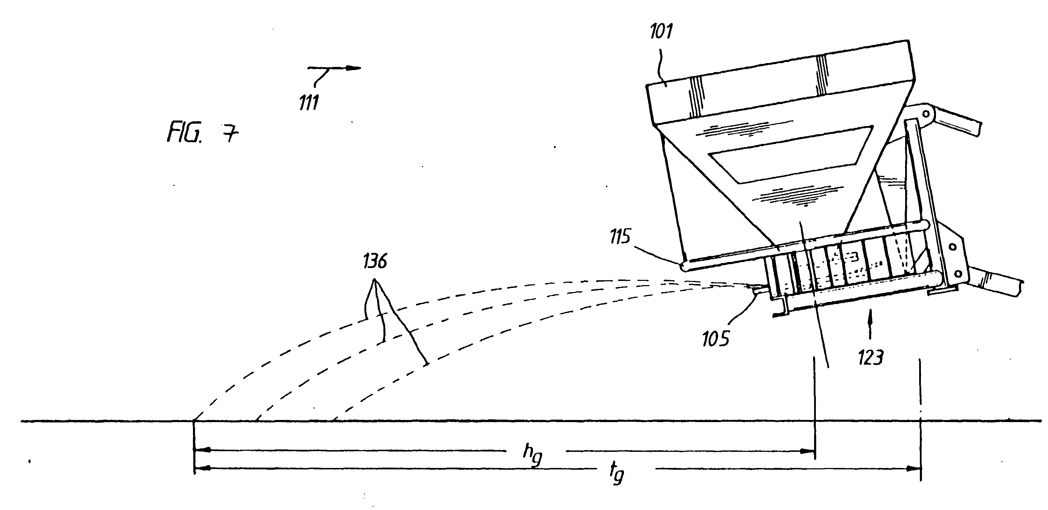

Wird nun die Düngemittelzufuhr zu der rechten Schleuderscheibe 105 des Schleuderdüngerstreuers unterbrochen, werden die Düngemittelpartikel nur über den Streusektor 116' der linken Schleuderscheibe 105 ausgebracht (Fig. 5). Das Entstehen der beiden Streusektoren 116' und 117' ist also getrennt steuerbar, wobei bei dem Streuen mít nur einem Streusektor 116' oder 117' die von der Schleuderscheibe 105 nach hinten abgeschleuderten Düngemittelpartikel im wesentlichen nicht über die seitliche Begrenzung 134 des Schleuderdüngerstreúers, die der den Streusektor 116' oder 117' erzeugenden Schleuderscheibe 105 abgewandt ist, hinaus werfen. Hierdurch läßt sich also die Streubreite ZA auf einfachste Weise ohne Beeinflussung der auszustreuenden Menge auf die Breite Ahalbieren. Die über den Streusektor 116' abgeschleuderten Düngemittelpartikel bilden dann das Streubild 135. Dieses Streubild 135 unterscheidet sich nur von dem Streubild 120 dadurch, daß die Streubreite halbiert ist. Die Charakteristik des Streubildes mit flach abfallenden Streuflanken bleibt unverändert beibehalten, wobei auch die Streustärke S bei gleicher Schieberstellung unverändert beibehalten wird.

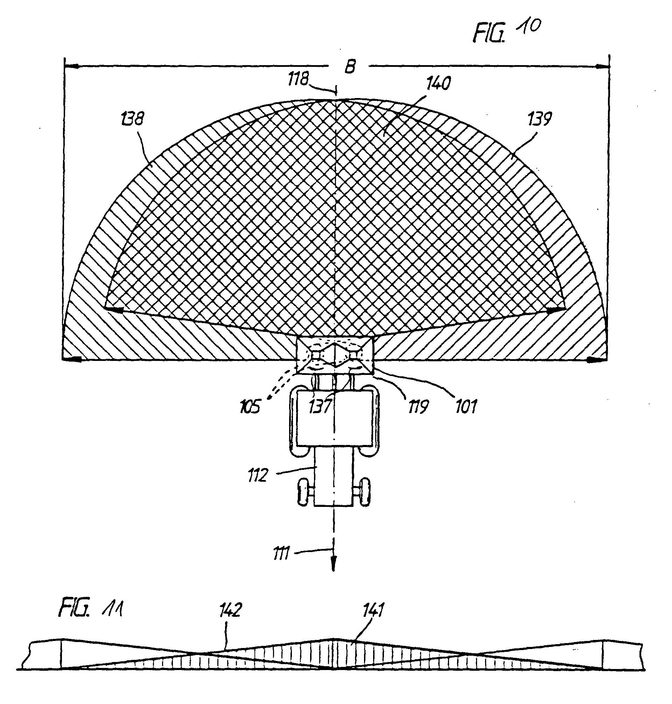

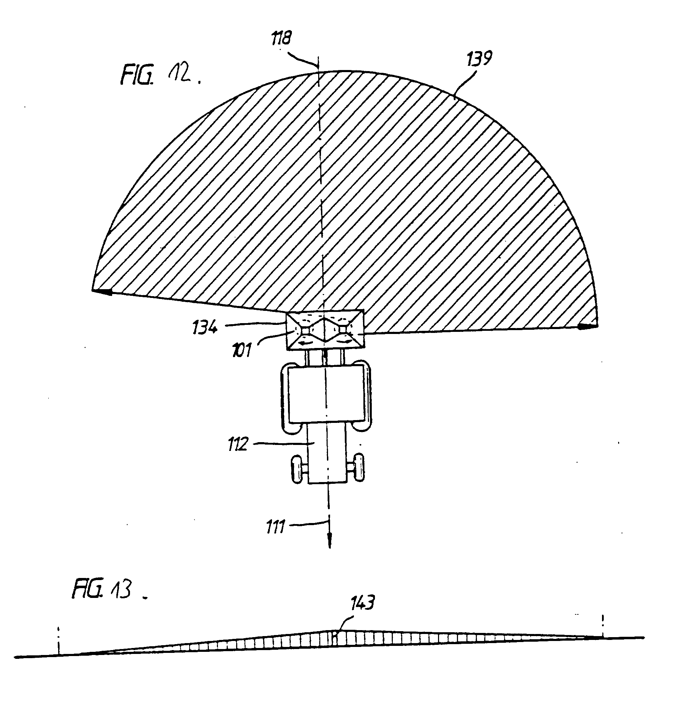

Die Fig.7 zeigt den Schleuderdüngerstreuer gemäß Fig.4 der nach hinten-unten geneigt ist. Hierdurch wird erreicht, daß die Wurfweite hg der Wurfbahnen 136 der Düngemittelpartikel, welche von den Schleuderscheiben 105 abgeschleudert werden, nach hinten verkürzt wird. Durch das nach hinten Neigen des Schleuderdüngerstreuers verringert sich die Streutiefe t noch einmal um einige Meter auf den Betrag tg und es entstehen die Streusektoren 116" und 117" gemäß Fig. 8. Auch dieses nach hinten Neigen des Schleuderdüngerstreuers wirkt sich nicht auf das Streubild 110 aus, welches von den von den Schleuderscheiben 105 abgeschleuderten Düngemittelpartikeln gebildet wird. Es bleibt in identischer Weise die Streubildcharakteristik gemäß Fig. 7 erhalten.

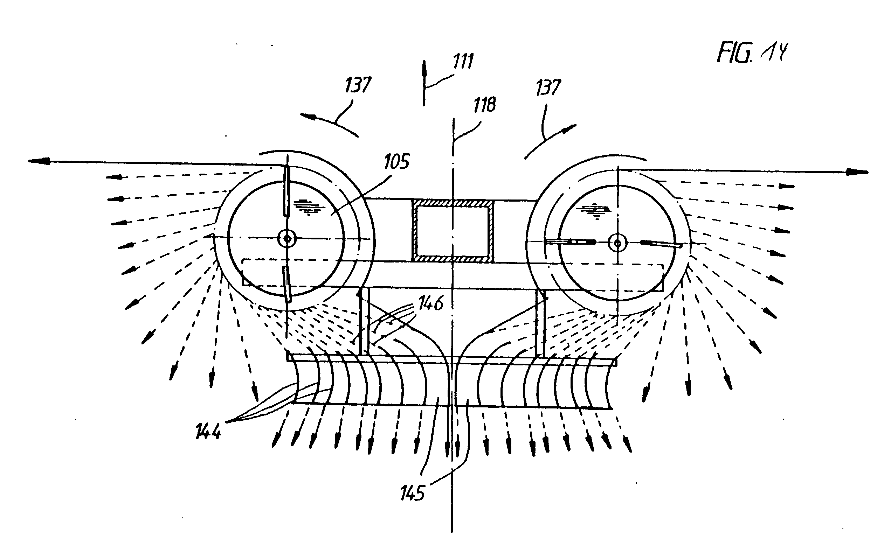

Die Fig. 10 zeigt in schematischer Darstellung den Ackerschlepper 212 und den an den Ackerschlepper angebauten Schleuderdüngerstreuer mit den in Pfeilrichtung 137 angetriehenen Schleuderscheiben 205. Diese Schleuderscheiben 105 werden derart angetrieben, daß sie in Fahrtrichtung 111 auf der Vorderseite des Schleuderdüngerstreuers auseinanderdrehen. Die den beiden Schleuderscheiben 105 aus dem Vorratsbehälter zugeführten Düngemittelpartikel werden über die Streusektoren 138 und 139 abgeschleudert. Durch die Antriebsrichtung der Schleuderscheiben 105, jeweils in Pfeilrichtung 137 wird erreicht, daß die von den einzelnen Schleuderscheiben 105 erzeugten Streusektoren 138 und 139 sich an sich annähernd vollständig überlappen, so daß der große Uberlappungsbereich 140 entsteht. Die einzelnen Düngemittelpartikel werden innerhalb dieser Streusektoren 138 und 139 jeweils seitlich und nach hinten, in bezug auf den Schleuderdüngerstreuer abgeschleudert. Infolge der gewählten Antriebsrichtung der Schleuderscheiben 105 wird sichergestellt, daß keine Düngemittelpartikel in nach vorn gerichteter Richtung über den vorderen Begrenzungsbereich 119 des Vorratsbehälters 101 des Schleuderdüngerstreuers abgeschleudert werden. Die von den Schleuderscheiben 105 gleichmäßig über die Streubreite B abgeschleuderten Düngemittelpartikel lassen das Streubild 141 gemäß Fig. 11 entstehen. Dieses Streubild 141 weist ebenfalls flach abfallende Streuflanken 142 auf.

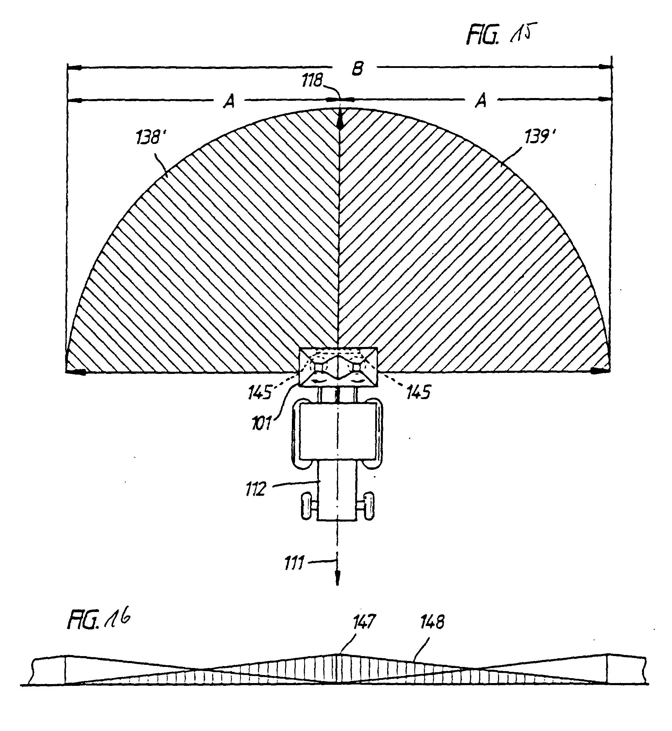

Wird nun die Düngemittelzufuhr der rechten Schleuderscheiben 105 unterbrochen, schleudert die linke. Schleuderscheibe 105 die ihr zugeführten Düngemittelpartikel innerhalb des Streusektors 139 gemäß Fig. 12 ab. Hierbei werden die von dieser Schleuderscheibe 105 sehr weit über die seitliche Begrenzung 134 des Streuers, die der den Streusektor 139 erzeugenden Schleuderscheibe 105, also der linken Schleuderscheibe, abgewandt ist, hinausgeworfen. Es steht das Streubild 143 gemäß Fig. 13. Dadurch daß die Düngemittelpartikel bis weit über die seitliche Begrenzung 134 des Streuers, die der den Streufächer 139 erzeugenden Schleuderscheibe abgewandt ist, hinausgeworfen werden, läßt sich mit diesem Schleuderdüngerstreuer kein halbseitiges Ausstreuen der Düngemittelpartikel erreichen. Soll nun beispielsweis das halbseitige Streuen mit einem Zentrifugaldüngerstreuer durchgeführt werden, ist es von besonderer Wichtigkeit, daß sich die einzelnen Streusektoren nur in einem kleinen Bereich, in der Maschinenmitte, geringfügig überlappen. Das halbseitige Reduzieren der gesamten Streubreite ist dann auf einfachste Weise durchführbar. Aus diesem Grunde werden die aufrecht stehenden Leitflächen 144 der Leitelemente 145 derart im hinteren Bereich der Schleuderscheiben 105 angeordnet, daß die über die Maschinenmitte 124 hinaus abgeschleuderten Düngerpartikel 146, in Draufsicht gesehen, abgelenkt werden, so daß sie im wesentlichen nicht über die seitliche Begrenzung 134 àes Streuers, die der den Streufächern 139 erzeugenden Schleuderscheibe 105 abgewandt ist, hinaus werfen. Durch den Einsatz der im hinteren Bereich der Schleuderscheiben 105 angeordneten, aufrecht stehenden Leitflächen 144 wird erreicht, daß die von den Schleuderscheiben 105 ansonsten weit über die Maschinenmitte 118 hinaus abgeschleuderten Düngerpartikel, in Draufsicht gesehen, umgelenkt werden und zwar derart, daß zwei quer zur Fahrtrichtung 111 nebeneinanderliegende, sich in Maschinenmitte 118 nur äußerst geringfügig oder nicht überlappende Streusektoren 138' und 139' erzeugen, wobei jeder Streusektor nur von einer Schleuderscheite erzeugt wird. Durch den Einsatz dieser Leitelemente 145 ist es nun auch bei diesem Streuer mit den in Pfeilrichtung 137 angetrieben Schleuderscheiben 105 möglich, das Entstehen der einzelnen Streusektoren 138' und 139' getrennt voneinander zu steuern, so daß.sich nun die Gesamtstreubreite B exakt um die Hälfte auf die Streubreite A reduzieren läßt. Die ansonsten annähernd über einen Bereich von ca. 180 abgeschleuderten Düngemittelpartikel entsprechend der sich weitüberlappenden Streusektoren 138 und 139 gemäß Fig. 10 werden durch den Einsatz der Leitelemente 145 derart umgelentk, dass die Streusektroen 138' und 139' gemäß Fig. 18 entstehen. Diese Streusektoren 138' und 139'β erstrecken sich hierbei jeweils annähernd nur noch über einen Bereich von ca. 90 wobei sich die beiden Streusektoren 138' und 139' in Maschinenmitte 118 auch geringfügig überlappen können. Das von dem Schleuderdüngerstreuer gemäß Fig. 16 erzeugte Streubild 147 unterscheidet sich in seiner Charakteristik nicht von dem Streubild 120. Es weist ebenfalls flach abfallende Streuflanken 148 auf.

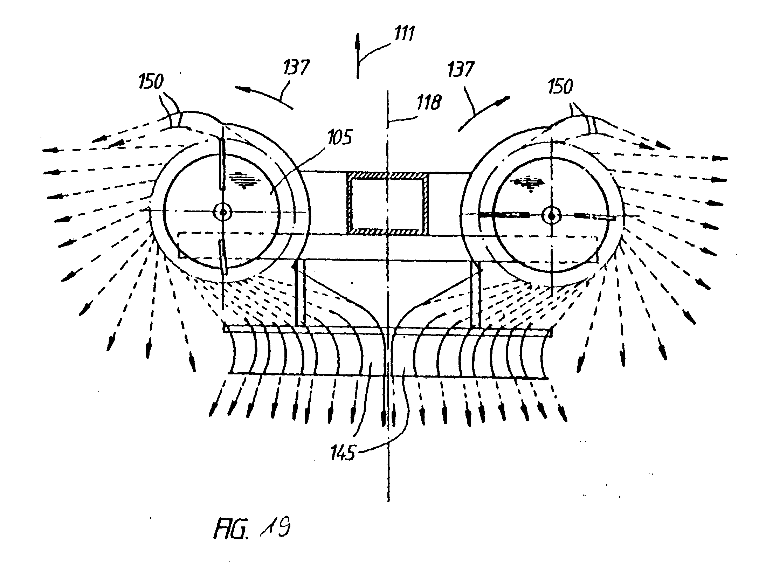

Wird nun die Düngemittelzufuhr zu der rechten Schleuderscheiben 105 des Schleuderdüngerstreuers gemäß Fig.17 unterbrochen, so schleudert die linke Schleuderscheibe 105 die ihr zugeführten Düngemittelpartikel über den Streusektor 139' ab, wobei dann das Streubild 149 gemäß Fig. 18 entsteht.

An dem Streuwerk gemäß Fig. 14 können natürlich auch noch die Leitflächen 150 gemäß Fig. 19 angeordnet sein, um über den vorderen Begrenzungsbereich 119 des Vorratsbehälters 101 des Schleuderdüngerstreuers abgeschleuderte Düngemittelpartikel derart umzulenken, dass sie nicht über diesen vorderen Begrenzungsbereich 119 abgeschleudert werden, wodurch dann die Streutiefe der Streusektoren in Fahrtrichtung noch weiter "zusammengeschoben" wird.

## Patentansprüche

1. Verfahren zum Ausbringen von Düngemitteln mittels eines Zentrifugaldüngerstreuers, der die Düngemittel mittels zumindest zwei um aufrechte Achsen rotierender und mit Wurfschaufeln besetzter Schleuderscheiben (5, 29, 105) über die zu bestreuende Fläche verteilt, wobei die Schleuderscheiben (5, 29, 105) mit entgegengesetztem Drehsinn zueinander angetrieben werden,
**dadurch gekennzeichnet, dass**
das Entstehen der Streufächer durch unabhängiges Zu- und Abschalten der jeder Schleuderscheibe zugeordneten Dosierelemente getrennt steuerbar ist, wobei bei dem Streuen mit nur einer Schleuderscheibe die von dieser Schleuderscheibe über die Maschinenmitte hinaus geschleuderten Düngerpartikel, in Draufsicht gesehen, zwischen aufrechtstehen beabstandete Umlenkelemente bildende Leitflächen umgelenkt werden und zwar derart, dass sie im Wesentlichen nicht über die der den Streufächer erzeugenden Schleuderscheibe abgewandten seitlichen "Begrenzung" des Streuers hinaus werfen.

2. Zentrifugaldüngerstreuer zur Durchführung des Verfahrens nach Anspruch 1, mit einem Vorratsbehälter, zwei um aufrechte Achsen im entgegengesetzten Drehsinn zueinander rotierend angetriebenen Schleuderscheiben, denen das sich im Vorratsbehälter befindliche Material über einstellbare Dosierelemente zugeführt wird und Umlenkelementen zur Beeinflussung der Wurfbahnen der abgeschleuderten Düngemittelpartikel,
**dadurch gekennzeichnet, dass**
die Dosierelemente getrennt und unabhängig voneinander einund abschaltbar sind, dass in Fahrtrichtung (11, 111) gesehen, im hinteren Bereich der bei Abschaltung der einen Schleuderscheibe (5, 105) noch einen Streusektor (139') erzeugenden Schleuderscheibe (5, 105) aufrecht stehende, die Umlenkelemente bildende zweinander beabstandete Leitflächen (32, 144) angeordnet sind, die derart ausgebildet sind, dass sie die in Drehrichtung der "abgeschalteten" Schleuderscheibe (5, 105) abgeworfenen Düngemittelpartikel fächerförmig in Richtung der nicht abgeschalteten Schleuderscheibe (5, 105) nach hinten umlenken, so dass sie nicht über die der den Streufächer erzeugenden Schleuderscheibe abgewandten seitlichen Begrenzung (134) hinauswerfen.

3. Zentrifugaldüngerstreuer nach Anspruch 2,
**dadurch gekennzeichnet, dass**
die in Fahrtrichtung (11, 111) gesehen im hinteren Bereich der Schleuderscheiben (5, 105) jeweils aufrechte Leitflächen (32, 144) spiegelbildlich gleich im Bereich der Mittelachse (24, 118) des Schleuderdüngerstreuers angeordnet sind.

4. Zentrifugaldüngerstreuer nach Anspruch 3,
**dadurch gekennzeichnet, dass**
die hinteren Leitflächen (32, 114) zwei quer zur Fahrtrichtung (11, 111) nebeneinanderliegend, sich nur äußerst geringfügig oder nicht überlappende Streusektoren (138, 139) erzeugen, wobei jeder Streusektor (138, 139) nur von einer Scheibe (5, 105) erzeugt wird.

5. Zentrifugaldüngerstreuer nach einem der vorstehenden Ansprüche 2 bis 4,
**dadurch gekennzeichnet, dass**
die Leiflächen Teil eines Leitkastens (18, 123) sind, der nach unten offen ist, wobei auf der Unterseite des Leitkastens (18, 123) dünne Streben zur Fixierung der Leitflächen (13, 14, 124, 150) angeordnet sind.

6. Zentrifugaldüngerstreuer nach einem oder mehreren der Ansprüche 2 bis 5,
**dadurch gekennzeichnet, dass**
auf der Oberseite der Leitflächen (13, 14, 124, 150) eine geschlossene Platte (130) angeordnet ist.

7. Zentrifugaldüngerstreuer nach einem oder mehreren der Ansprüche 2 bis 6,
**dadurch gekennzeichnet, dass**
sich hinter den Schleuderscheiben (5, 105) ein liegend angeordnetes Leitblech (25) befindet, welches sich auf der den Schleuderscheiben (5) zugewandten Seite zunächst etwa tangential an die Wurfbahnen der Düngepartikel anlegt und dann nach unten gekrümmt ist und die Düngepartikel seitlich nach unten ablenkt.

8. Zentrifugaldüngerstreuer nach Anspruch 7,
**dadurch gekennzeichnet, dass**
auf der Unterseite des Leitbleches (25) aufrecht stehende Leitflächen (27) angeordnet sind, dass diese Leitflächen (27) sich zunächst auf ihren, den Schleuderscheiben (5) zugewandten Seiten tangential an die Wurfbahn der Düngerpartikel anlegen und anschließend in seitlicher Richtung gekrümmt sind.

## Claims

1. Method of distributing fertilizers by means of a centrifugal fertilizer spreader, which distributes the fertilizers by means of at least two centrifugal discs (5, 29, 105), which rotate about upwardly extending axes and are provided with throwing vanes, over the area to be covered, the centrifugal discs (5, 29, 105) being driven in opposite directions of rotation relative to each other, **characterised in that** the production of the dispersing fans is separately controllable by independently connecting and disconnecting the metering members associated with each centrifugal disc, wherein, if spreading is effected with only one centrifugal disc, the fertilizer particles which are centrifuged beyond the centre of the machine by this centrifugal disc, when viewed from above, are deflected between upwardly extending guide faces, which form spaced-apart guide members, in such a manner that basically they are not thrown beyond the lateral "boundary" of the spreader remote from the centrifugal disc producing the dispersing fan.

2. Centrifugal fertilizer spreader for accomplishing the method according to claim 1, having a hopper, two centrifugal discs which are driven so as to be rotatable about upwardly extending axes in the opposite directions of rotation relative to each other, to which discs the material situated in the hopper is supplied via adjustable metering members, and guide members for influencing the trajectories of the centrifuged fertilizer particles, **characterised in that** the metering members are connectable and disconnectable separately and independently of one another, **in that**, when viewed with respect to the direction of travel (11, 111), upwardly extending guide faces (32, 144), which form the guide members and are spaced from each other, are disposed in the rear region of the centrifugal disc (5, 105) producing another dispersing sector (139') if one centrigugal disc (5, 105) is disconnected, said guide faces being so configured that they guide rearwardly the fertilizer particles, which have been discharged in the direction of rotation of the "disconnected" centrifugal disc (5, 105), in a fan-shaped manner in the direction of the non-disconnected centrifugal disc (5, 105), so that they do not throw beyond the lateral boundary (134) remote from the centrifugal disc producing the dispersing fan.

3. Centrifugal fertilizer spreader according to claim 2, **characterised in that**, when viewed with respect to the direction of travel (11, 111), upwardly extending guide faces (32, 144) are disposed in the respective rear region of the centrifugal discs (5, 105) and symmetrically in the region of the central axis (24, 118) of the centrifugal fertilizer spreader.

4. Centrifugal fertilizer spreader according to claim 3, **characterised in that** the rear guide faces (32, 114) produce two dispersing sectors (138, 139), which lie adjacent each other transversely relative to the direction of travel (11, 111) and either only extremely slightly overlap each other or do not overlap, each dispersing sector (138, 139) being produced by only one disc (5, 105).

5. Centrifugal fertilizer spreader according to one of the preceding claims 2 to 4, **characterised in that** the guide faces are part of a guide box (18, 123), which is open downwardly, thin bars being disposed on the underside of the guide box (18, 123) for the securement of the guide faces (13, 14, 124, 150).

6. Centrifugal fertilizer spreader according to one or more of claims 2 to 5, **characterised in that** a closed plate (130) is disposed on the upper surface of the guide faces (13, 14, 124, 150).

7. Centrifugal fertilizer spreader according to one or more of claims 1 to 6, **characterised in that** a horizontally disposed baffle plate (25) is situated behind the centrifugal discs (5, 105), which baffle plate initially lies substantialy tangentially adjacent to the trajectories of the fertilizer particles on the side facing the centrifugal discs (5) and is then curved downwardly and deflects the fertilizer particles laterally and downwardly.

8. Centrifugal fertilizer spreader according to claim 7, **characterised in that** upwardly extending guide faces (27) are disposed on the underside of the baffle plate (25), and **in that** said guide faces (27) initially lie tangentially adjacent to the trajectory of the fertilizer particles on their sides facing the centrifugal discs (5) and are subsequently curved in a lateral direction.

## Revendications

1. Procédé de distribution d'engrais à l'aide d'un épandeur centrifuge d'engrais qui distribue l'engrais à l'aide d'au moins deux disques d'épandage (5, 29, 105) tournant autour d'axes verticaux et équipés de palettes d'éjection pour distribuer l'engrais sur la surface à traiter, les disques d'épandage centrifuges (5, 29, 105) étant entraînés suivant un sens de rotation opposé,
**caractérisé en ce qu'**
- on commande séparément la formation des éventails d'épandage par une coupure ou une alimentation indépendante des éléments de dosage associés à chaque disque d'épandage centrifuge, et
- lors de l'épandage avec seulement un disque d'épandage, les particules d'engrais projetées au-delà du milieu de la machine par ce disque d'épandage, en vue de dessus, sont déviées entre des surfaces verticales de guidage formant des éléments de renvoi écartés et cela de façon à ne pas être projetées essentiellement au-delà de la « limite » latérale de l'épandeur, opposée au disque d'épandage générant l'éventail d'épandage.

2. Epandeur centrifuge d'engrais pour la mise en oeuvre du procédé selon la revendication 1 comprenant un réservoir, deux disques d'épandage centrifuges entraînés en rotation en sens opposé autour d'axes verticaux, et recevant la matière contenue dans le réservoir par des éléments de dosage réglables, ainsi que des éléments de déviation pour influencer les trajectoires d'éjection des particules d'engrais éjectées,
**caractérisé en ce que**
les éléments de dosage peuvent être coupés et branchés séparément et indépendamment et vu dans la direction de déplacement (il, 111), dans la zone arrière, le disque d'épandage (5, 105) qui génère encore un secteur d'épandage (1391) lorsque l'un des disques d'épandage (5, 105) est coupé, comporte des surfaces de guidage (32, 144), verticales, écartées l'une de l'autre et formant des éléments de renvoi, réalisés pour dévier vers l'arrière les particules d'engrais éjectées dans la direction de rotation du disque d'épandage (5, 105), coupé, soient déviées en éventail en direction du disque d'épandage (5, 105) non coupé, vers l'arrière, pour ne pas être projetées au-delà de la limite latérale (134) opposée au disque d'épandage qui génère l'éventail d'épandage.

3. Epandeur centrifuge d'engrais selon la revendication 2,
**caractérisé en ce que**
les surfaces de guidage verticales (32, 144), qui se trouvent chaque fois dans la zone arrière des disques d'épandage (5, 105) lorsqu'on regarde dans la direction de déplacement (11, 111), sont disposées suivant une symétrie plane, dans la zone de l'axe médian (24, 118) de l'épandeur centrifuge d'engrais.

4. Epandeur centrifuge d'engrais selon la revendication 3,
**caractérisé en ce que**
les surfaces de guidage arrière (32, 114) génèrent deux secteurs d'épandage (138, 139) juxtaposés dans la direction de déplacement (11, 111) et ne se chevauchant que légèrement ou pas du tout, et chaque secteur d'épandage (138, 139) n'est généré que par un disque (5, 105).

5. Epandeur centrifuge d'engrais selon l'une quelconque des revendications 2 à 4,
**caractérisé en ce que**
les surfaces de guidage font partie d'un caisson de guidage (18, 123) ouvert vers le bas et sur le côté inférieur du caisson de guidage (18, 123), il y a de minces entretoises pour fixer les surfaces de guidage (13, 14, 124, 150).

6. Epandeur centrifuge d'engrais selon l'une quelconque des revendications 2 à 5,
**caractérisé en ce qu'**
une plaque fermée (130) est prévue sur le côté supérieur des surfaces de guidage (13, 14, 124, 150).

7. Epandeur centrifuge d'engrais selon l'une quelconque des revendications 4 à 6,
**caractérisé en ce que**
derrière les disques d'épandage (5, 105), il y a une tôle de guidage (25) disposée couchée, et qui rejoint tout d'abord tangentiellement les trajectoires d'éjection des particules d'engrais du côté tourné vers les disques d'épandage (5), puis est courbée vers le bas et dévie vers le bas, latéralement les particules d'engrais.

8. Epandeur centrifuge d'engrais selon la revendication 7,
**caractérisé en ce que**
le côté inférieur de la tôle de guidage (25) comporte des surfaces de guidage (27) tout d'abord debout et ces surfaces de guidage (27) s'appliquent d'abord tangentiellement à la trajectoire déjection des particules d'engrais sur le côté tourné vers les disques d'épandage (5), puis sont courbées dans la direction latérale.
